# EUROPEAN PATENT SPECIFICATION

(11) **EP 1 574 548 B1**
(45) Date of publication and mention of the grant of the patent: **16.04.2008**
(21) Application number: 03782851.4
(22) Date of filing: 19.12.2003
(51) Int. Cl.: C08K 5/50, C08K 5/00

(54) **ANTISTATIC AGENTS FOR RESINS, ANTISTATIC RESIN COMPOSITIONS, AND MOLDINGS OF ANTISTATIC RESINS**
ANTISTATIKA FÜR HARZE, ANTISTATISCHE HARZZUSAMMENSETZUNGEN UND FORMKÖRPER AUS ANTISTATISCHEN HARZEN
AGENTS ANTISTATIQUES POUR RESINES, COMPOSITIONS DE RESINE ANTISTATIQUE ET MOULAGES DE RESINES ANTISTATIQUES

(30) Priority: 19.12.2002 JP 2002367920; 19.12.2002 JP 2002367921; 19.12.2002 JP 2002367922
(43) Date of publication of application: 14.09.2005
(73) Proprietor: Nippon Chemical Industrial Co., Ltd., Koto-ku, Tokyo 136-8515 (JP)
(72) Inventor: KAWAKABE, Hiroshi, Nippon Chemical Industrial Co., Koto-ku,Tokyo 136-8515 (JP); SUGIYA, Masashi, Nippon Chemical Industrial Co Ltd, Koto-ku,Tokyo 136-8515 (JP); HARA, Yoshifusa, Nippon Chemical Industrial Co.Ltd, Koto-ku,Tokyo 136-8515 (JP); ARAI, Shigeyuki, NAGASE & CO., LTD., Chuo-ku, Tokyo 103-8355 (JP); SAIMARU, Jin, NAGASE & CO., LTD., Chuo-ku, Tokyo 103-8355 (JP)
(74) Representative: Jönsson, Hans-Peter
(86) International application number: PCT/JP2003/016401
(87) International publication number: WO 2004/056917

(56) References cited:
- WO-A-01/87900
- JP-A- 11 001 605
- JP-A- 11 092 751
- US-A- 5 118 346
- DATABASE CA [Online] CHEMICAL ABSTRACTS SERVICE, COLUMBUS, OHIO, US; Abstract of JP-A-2002 173592 21 June 2002 (2002-06-21), SATO, ICHIRO ET AL SATO, ICHIRO ET AL: "Antistatic agents and polycarbonate compositions containing them with good transparency and impact resistance Antistatic agents and polycarbonate compositions containing them with good transparency and impact resistance" XP002404445 retrieved from STN Database accession no. 2002:465605 & JP 2002 173592 A (SUMITOMO DOW LIMITED, JAPAN; NIPPON CHEMICAL INDUSTRIAL CO., LTD. SUMI) 21 June 2002 (2002-06-21)
- DATABASE WPI Week 199924 Derwent Publications Ltd., London, GB; AN 1999-283780 XP002404454 & JP 11 092751 A (SANYO CHEM IND LTD) 6 April 1999 (1999-04-06)

## Description

### Technical Field

The present invention relates to a phosphonium salt group antistatic agent, antistatic resin compositions containing such, and antistatic resin molded products.

### Background Art

Resins have long provided a variety of uses depending on the properties thereof. For example, polyamide resins such as nylon-6, nylon-6,6, nylon-12, and copolymer nylons are not only broadly used as textile materials, but are also widely applied as engineering plastics because of superior thermal characteristics, mechanical characteristics and chemical characteristics, etc. In addition, for example, polyester resins represented by polyethylene terephthalate are transparent and have superior chemical and mechanical characteristics, and are applied to plastic bottles (including PET bottles for beverages), fibers, film (including photographic film), cloth, non-fibrous cloth, and adhesives. In particular, polyester films, etc. are broadly used for magnetic cards such as credit cards.

### Disclosure of the Invention

However, generally these resins are electrically insulative, are prone to collect electric charges, have problems with the adhesion of dust and foreign material, and may cause damage in association with static electricity. A way to provide antistatic performance has long been sought.

Here, the method of including graphite fiber and/or carbon black has been proposed in order to grant the resins antistatic performance. However, there remains the problem that, when mixing, carbon black, etc. colors the resin and cannot be used if the application requires transparency or coloring with a light color.

In addition, surfactants are also compounded in resins. For example, there have been proposals to improve antistatic characteristics by mixing polyethylene glycol and alkyl sulfonate salts into polyethylene terephthalate as antistatic agents. In addition, there have been proposals for a method that compounds alkyl sulfonate metal salts or alkyl sulfonate phosphonium salts into the polyester (Japanese Laid-open Patent Publication No. H10-298411), and for a method that coats or mixes in ammonium salt. However, there are the problems that when compounding these into the resin, the color becomes non-transparent white, and that these substances cannot be used in resins requiring mixing or molding at comparatively high temperatures because of poor heat resistance.

In addition, there have been proposals to provide antistatic performance by mixing or copolymerizing chlorine salts of phosphonium salt or ammonium salt into the resins as antistatic agents. However, these methods have the problem that expensive molds used to mold the resins are corroded because of the free chlorine ions.

Addressing this kind of issue, Japanese Laid-open Patent Publication No. H11-92751 disclosed an antistatic agent for resins comprising a compound having anti-anions (a) and one cationic group in the molecule (b). Quaternary ammonium salt groups or phosphonium salt groups were cited as cationic groups (b), and combinations of proton acid and Lewis acid were cited as anti-anions (a), but in the Examples, only ammonium salt was evaluated in relation to polycarbonate resin, and no concrete disclosure was suggested regarding the phosphonium salt of a specified structure that configures the invention of the present patent application. Because there are great differences in the thermal decomposition temperatures of phosphonium salt and ammonium salt, it is not necessarily possible to discuss both in tandem when using as an antistatic agent for plastic materials that reach high temperatures when mixing and molding.

The present invention takes the difficulties above as the problems to be resolved, and as an object to offer a novel antistatic agent and an antistatic resin composition containing this that can provide superior antistatic characteristics to various types of resins without reducing the transparency of the resin.

The present inventors discovered that the above problem points can be resolved by compounding a specified phosphonium salt into various types of resins as an antistatic agent.

Specifically, the present invention is the use as an antistatic agent for resins of phosphonium salts represented by the general formula (1) below: 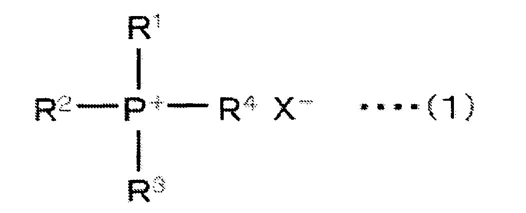 (wherein R¹, R², and R³ are each a straight-chain or branched alkyl group having 3 to 8 carbon atoms, and R⁴ is a straight-chain or branched alkyl group having 10 to 22 carbon atoms; each alkyl group may have substituted hydroxy group or alkoxy group; R¹, R², and R³ may be the same or different from each another; and X⁻ is a tetrafluoroborate ion).

As a suitable embodiment, this phosphonium salt is tri-n-butyl-n-hexadecylphosphonium tetrafluoroborate.

As a further suitable embodiment, the residual halogen of the antistatic agent for resins is 500 ppm or less.

This antistatic agent for resins is suitable for use as an antistatic agent for thermoplastic resins and as an antistatic agent for thermoset resins. When used as an antistatic agent for thermoplastic resins, this antistatic agent is specifically suitable for use as an antistatic agent for polyamide resins and as an antistatic agent for polyester resins. Further, when used as an antistatic agent for thermoset resins, this antistatic agent is specifically suitable for use as an antistatic agent for polyurethane resins and as an antistatic agent for epoxy resins.

As a suitable embodiment, the amount of the above phosphonium salt compounded is 0.01 to 50 weight parts per 100 weight parts resin.

In addition, thermoplastic resins and thermoset resins may be cited as suitable resins. Specifically, polyamide resins and polyester resins are suitable as thermoplastic resins. In addition, specifically, polyurethane resins and epoxy resins are suitable as thermoset resins.

Moreover, the antistatic resin compositions may contain carbon materials such as carbon nanotubes and carbon black resin, etc. that can make the conductive characteristics even higher. Specifically, carbon nanotubes are preferable as this carbon material.

The antistatic agent for resins of the present invention can impart superior antistatic characteristics to a variety of resins with hardly any reduction in the transparency of the resin. Moreover, the antistatic resin compositions of the present invention may be suitably used in a variety of resin products because of the superior antistatic characteristics.

### Brief Description of the Drawings

Fig. 1 is a table indicating the composition, surface resistance value and external appearance of the resin compositions of Examples 1 to 15;

Fig. 2 is a table indicating the composition, surface resistance value and external appearance of the resin compositions of Comparative Examples 1 to 11;

Fig. 3 is a table indicating the composition and surface resistance value of the resin compositions of Examples 16 to 19 and Comparative Examples 12 and 13; and

Fig. 4 is a table indicating the composition and surface resistance value of the resin compositions of Examples 20 to 24 and Comparative Examples 14 to 17.

### Best Mode for the Carrying Out the Invention

Suitable embodiments of the present invention will be described below.

The antistatic agent for resins of the present invention contains as the effective component the phosphonium salts represented by the general formula (1): 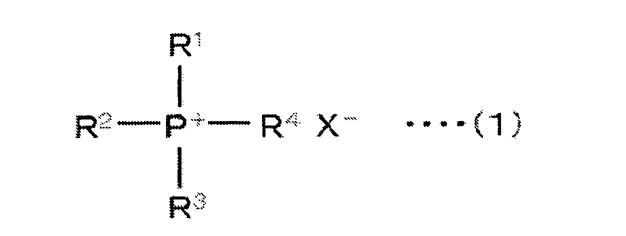 In the phosphonium salt formula, R¹, R², and R³ are each a straight-chain or branched alkyl group having 3 to 8 carbon atoms, and the alkyl groups may have substituted hydroxy group or alkoxy group. Preferably, R¹, R², and R³ are straight-chain alkyl groups having 3 to 8 carbon atoms. R⁴ is a straight-chain or branched alkyl group having 10 to 22 carbon atoms, and the alky group may have substituted hydroxy group or alkoxy group. Preferably, R⁴ is a straight-chain or branched alkyl group having 10 to 22 carbon atoms. In addition, X⁻ is a tetrafluoroborate ion).

Specifically, examples of R¹, R², and R³ include propyl group, butyl group, isopropyl group, isobutyl group, sec-butyl group, tert-butyl group, hydroxypropyl group, hexyl group, octyl group, and tert-octyl group. In addition, dodecyl group, tetradecyl group, hexadecyl group, octadecyl group, eicosyl group, and docosyl group may be cited as examples of R⁴. R¹, R², and R³ may be the same group or different respectively.

Examples of the phosphonium salt represented in the previously described general formula (1) used in the present invention include tri-butyl-n-decylphosphonium tetrafluoroborate, tri-butyl-n-dodecylphosphonium tetrafluoroborate, tri-butyl-n-tetradecylphosphonium tetrafluoroborate, tri-butyl-n-hexadecylphosphonium tetrafluoroborate, tri-butyl-n-octadecylphosphonium tetrafluoroborate, tri-butyl-n-eicosylphosphonium tetrafluoroborate, tri-butyl-n-docosylphosphonium tetrafluoroborate, tri-propyl-n-decylphosphonium tetrafluoroborate, tri-propyl-n-dodecylphosphonium tetrafluoroborate, tri-propyl-n-tetradecylphosphonium tetrafluoroborate, tri-propyl-n-hexadecylphosphonium tetrafluoroborate, tri-propyl-n-octadecylphosphonium tetrafluoroborate, tris(hydroxypropyl)-n-decylphosphonium tetrafluoroborate, trihexyl-n-dodecylphosphonium tetrafluoroborate, trihexyl-n-hexadecylphosphonium tetrafluoroborate, trioctyl-n-dodecylphosphonium tetrafluoroborate, trioctyl-n-octadecylphosphonium tetrafluoroborate, tris(hydroxypropyl)-n-dodecylphosphonium tetrafluoroborate, tris(hydroxypropyl)-n-tetradecylphosphonium tetrafluoroborate, tris(hydroxypropyl)-n-hexadecylphosphonium tetrafluoroborate, tris(hydroxypropyl)-n-octadecylphosphonium tetrafluoroborate. One or two or more of these phosphonium salts may be used, and preferably tri-butyl-n-hexadecylphosphonium tetrafluoroborate is used.

Phosphonium salts are an indispensable condition of the antistatic agent for resins of the present invention. Ammonium salts are also known as the same kind of cationic antistatic agent, but phosphonium salts have higher thermal resistance than ammonium salts, and pyrolysis does not occur at comparatively high temperatures when mixing with resins and molding. Consequently, phosphonium salts can be used without problems even when ammonium salts cannot be used because of pyrolysis.

In the present invention, of the four substitution groups of the cationic parts configured with phosphonium salts, three use alkyl groups having 3 to 8 carbon atoms, which are comparatively short alkyl groups, and the remaining one uses an alkyl group having 10 to 22 carbon atoms, which is a long-chain alkyl group; and this is necessary in order to obtain superior antistatic performance. This is because the performance as a surfactant is improved compared to when all four substitution groups are the same. Moreover, using tetrafluoroborate as the anionic part configuring the phosphonium salt is also an indispensable condition. This is because the thermal resistance characteristics are dramatically improved compared to when other anions are used. The antistatic agent of the present invention dramatically improves the antistatic and thermal resistance characteristics compared to conventional ammonium salt and phosphonium salt groups because of the synergy effect of the anionic and cationic parts. Therefore, the antistatic agent of the present invention can be compounded into various types of resins without pyrolysis occurring at the time of mixing into the resin or at the time of molding; antistatic and thermal resistance characteristics can be granted to various types of resins; and inclusion in the resin causes hardly any reduction of transparency.

The antistatic agent for resins of the present invention is normally a solid at room temperature, and the mean particle size required for the laser refraction method is 100 µm or less, preferably 1 to 50 µm, and in particular, particles of 1 to 20 µm are desirable. This is because the dispersion characteristics when mixing into the resin are poor and the superior antistatic effect cannot be obtained if the particle size is 100 µm or more. In addition, with a melting point lower than the mixing temperature of the common resins, the antistatic agent for resins of the present invention is a liquid when mixing, and therefore has satisfactory dispersion characteristics.

Further, the content of the remaining halogen of the antistatic agent for resins of the present invention is a value measured by silver nitrate titration, and is 500 ppm or less, and 400 ppm or less is preferable. Here, the remaining halogen is a chlorine ion, bromine ion or iodine ion, and produces silver and a poorly soluble salt when titrated with silver nitrate. A residual chlorine ion, etc. content greater than 500 ppm tends to be a source for corrosion of the mold when added to the resin and molded, tends to make the resin molded product obtained yellowish, and is therefore not preferable.

The antistatic agent for resins of the present invention, for example, may be produced in the following way. After allowing alkyl halide to react with trialkyl phosphine in an inert gas atmosphere to obtain a phosphonium salt in which the anionic group is a halogen (described in Japanese Laid-open Patent Publication No. S63-119491), neutralization or acidification processing is conducted as desired (described in Japanese Laid-open Patent Publication No. H11-124388). Next, an alkali metal fluoroborate aqueous solution such as sodium fluoroborate aqueous solution is titrated into the phosphonium salt aqueous solution obtained. The targeted tetraalkylphosphonium tetrafluoroborate may then be obtained by rinsing, drying and pulverizing as desired. Further, it is preferable to add ion exchanged water to the tetraalkylphosphonium tetrafluoroborate obtained, and to conduct repeated rinsing and filtering procedures until the halogen content of the filter solution is 500 ppm or less when the filter solution is analyzed by silver nitrate titration. The crystals obtained are dried and pulverized, and the targeted antistatic agent for resins is obtained. Tributyl-hexadecylphosphonium chloride, tributyl dodecylphosphonium chloride, tripropyl-hexadecylphosphonium chloride, tributyl-hexadecylphosphonium bromide, and tributyl-octadecylphosphonium bromide may be cited as examples of phosphonium salts in which the anionic group is a halogen, and commercially available products may be used.

The antistatic agent for resins of the present invention can be jointly used with other antistatic agents so long as the objectives of the present invention are not lost. The other antistatic agents that can be jointly used are not particularly limited, and well-known agents may be used. Alkyl sulfonate salts, alkyl benzene sulfonate salts, ammonium salts, and other phosphonium salts may be cited as examples, but the other antistatic agents are limited by these.

In addition to using as a resin compound by mixing in and including in a resin as previously described, the antistatic agent of the present invention may also provide materials superior antistatic characteristics by, for example, dissolving or dispersing the antistatic agent of the present invention in water, low grade alcohol, or ketones, etc., coating this on the surface of the material, and drying.

Next, the antistatic resin composition of the present invention will be explained.

The antistatic resin composition of the present invention compounds the phosphonium salt expressed by the general formula (1) in a resin.

Preferably, thermoplastic resins or thermoset resins can be used as the resin used in the present invention.

Various types of resins used for molding, for example, polyester resins, olefin resins, acryl resins, styrene resins, polyamide resins, polycarbonate resins, polyphenylene oxide resins, and vinyl resins may be cited as the thermoplastic resin. The thermoplastic resins here will be described in detail below.

<Polyester resins>

The polyester resin is a homopolyester or copolyester obtained by polycondensation of dicarbonic acid components and diol components, polycondensation of oxycarbonic acid or lactone, or polycondensation of the components thereof. The various components may be used singly or in combinations of two or more. The preferable polyester resin normally includes a saturated polyester resin, specifically, an aromatic saturated polyester resin. For example, aliphatic dicarbonic acids (for example, dicarbonic acids having 6 to 40 carbon atoms such as adipic acid, pimelic acid, suberic acid, azelaic acid, sebacic acid, dodecan dicarbonic acid, hexadecan dicarbonic acid and dimer acid; preferably, dicarbonic acids having 1 to 14 carbon atoms), alicyclic dicarbonic acids (for example, dicarbonic acid having 8 to 12 carbon atoms such as hexahydrophthalic acid, hexahydroisophthalic acid, hexahydroterephthalic acid, and himic acid), aromatic dicarbonic acids (for example, dicarbonic acids having 8 to 16 carbon atoms such as phthalic acid, isophthalic acid, terephthalic acid, naphthalene dicarbonic acids such as 2,6-naphthalene dicarbonic acid, 4,4'-diphenyl dicarbonic acid, 4,4'-diphenoxy ether dicarbonic acid, 4,4'-diphenylmethane dicarbonic acid, and 4,4'-diphenyl ketone dicarbonic acid), or derivatives of these (for example, derivatives that can form ester, such as lower alkyl esters, and acid anhydrides) may be cited as dicarbonic acid components. Further, multivalent carbonic acids such as trimellitic acid and pyromellitic acid may also be jointly used as necessary. Preferably, an aromatic dicarbonic acid such as terephthalic acid, or naphthalene dicarbonic acid is contained in the dicarbonic acid component.

Diol components include, for example, aliphatic alkylene diols (for example, aliphatic glycols having 2 to 12 carbon atoms such as ethylene glycol, trimethylene glycol, propylene glycol, 1,4-butane diol, 1,3-butane diol, neopenthyl glycol, hexane diol, octane diol, and decane diol; preferably, aliphatic glycols having 2 to 10 carbon atoms), polyoxyalkylene glycol [glycols having an alkylene group with 2 to 4 carbon atoms and having multiple oxyalkylene units, for example, diethylene glycol, dipropylene glycol, ditetramethylene glycol, triethylene glycol, tripropylene glycol, polytetramethylene glycol, polyethylene glycol (molecular weight 400 to 30000), etc.], alicyclic diols (for example, 1,4-cyclohexane diol, 1,4-cyclohexane dimethanol, and bisphenol A hydride), and aromatic diols [for example, biphenol, 2,2-bis(4-hydroxyphenyl) propane, 2,2-bis-(4-(2-hydroxyethoxy)-phenyl) propane, and xylylene glycol], etc. Further, polyols such as glycerin, trimethylol propane, trimethylol ethane, and pentaerythritol, may be jointly used as necessary.

Preferably, the diol component includes C₂₋₆ alkylene glycol (straight-chain alkylene glycols such as ethylene glycol, propylene glycol, 1,4-butane diol), polyoxyalkylene glycols having 2 to 4 repeating oxyalkylene units [glycols containing a sinle unit of poly (oxy-C₂₋₄ alkylene) such as diethylene glycol], and 1,4-cyclohexane dimethanol, etc.

Oxycarbonic acids include, for example, oxycarbonic acids such as oxybenzoic acid, hydroxynaphthoic acid, hydroxyphenylacetic acid, glycolic acid, and oxycaproic acid, or derivatives thereof.

Lactone includes C₃₋₁₂ lactones such as propiolactone, butyrolactone, valerolactone, and caprolactone (for example, ε-caprolactone).

Preferably, polyester resins include homopolyester or copolyester (specifically, polyalkylene arylate resin) having a main component (for example, 50 to 100 weight%, preferably in the range of 75 to 100 weight%) of an alkylene arylate such as alkylene terephthalate and alkylene naphthalate, etc.; for example, a homopolyester such as polyalkylene terephthalate (for example, polycycloalkane di-C₁₋₄ alkylene terephthalate such as poly 1,4-cyclohexane dimethylene terephthalate (PCT), and poly C₂₋₄ alkylene terephthalate such as polyethylene terephthalate (PET), polypropylene terephthalate (PPT), and polybutylene terephthalate (PBT)), and polyalkylene naphthalate (for example, poly C₂₋₄ alkylene naphthalate such as polyethylene naphthalate, and polybutylene naphthalate); or a copolyester containing alkylene terephthalate and/or alkylene naphthalate units as a main component (for example, 50 weight% or more). Specifically, preferable polyester resins include polyethylene terephthalate resins containing ethylene terephthalate units as the main component (for example, polyethylene terephthalate, polyethylene terephthalate copolyester), and polybutylene terephthalate resins containing butylene terephthalate units as the main component (for example, polybutylene terephthalate, polybutylene terephthalate copolyester).

Moreover, a condensate of at least one type of dibasic acid selected from the chemical species comprising, for example, terephthalic acid, isophthalic acid, cyclohexane dicarbonic acid, naphthalene dicarbonic acid, diphenyl dicarbonic acid, and stilbene dicarbonic acid as the essential acid component, and 1,4-cyclohexane dimethanol as the essential diol component may be cited as a more preferable polyester resin for use in the present invention. More preferably, at least one type of dibasic acid selected from the chemical species comprising aromatic dicarbonic acid having 8 to 14 carbon atoms, aliphatic dicarbonic acid having 4 to 12 carbon atoms, and alicyclic dicarbonic acid having 8 to 12 carbon atoms is further contained in the acid component of the condensate. Containing at least one kind of dibasic acid selected from the chemical species comprising phthalic acid, cyclohexane diacetic acid, succinic acid, glutaric acid, adipic acid, azelaic acid and sebacic acid is even further preferable. Moreover, the condensate preferably contains a diol component of at least one kind of glycol component selected from the chemical species comprising, for example, ethylene glycol, diethylene glycol, triethylene glycol, propane diol, butane diol, pentane diol, hexane diol, neopentyl glycol, and tetramethyl cyclobutane diol.

Further, these polyester resins may be used singly or in combinations of 2 or more.

In addition, C₂₋₆ alkylene glycol (straight-chain alkylene glycols such as ethylene glycol, propylene glycol, 1,4-butane diol), polyoxyalkylene glycols having 2 to 4 repeating oxyalkylene units [glycols containing poly (oxy-C₂₋₄ alkylene) units such as diethylene glycol], C₆₋₁₂ aliphatic dicarbonic acid (adipic acid, pimelic acid, suberic acid, azelaic acid, sebacic acid, etc.), and aromatic dicarbonic acid (phthalic acid, isophthalic acid, etc.) may be cited as the monomers that can be copolymerized in the copolyester.

The polyester resin may have not only a straight-chain, but also a branched-chain structure, or may be bridged as long as the fusion molding characteristics are not lost. In addition, liquid crystal polyester is also possible. In many cases, this liquid crystal polyester contains a main component (for example, in the range of 60 to 100 mol%, preferably 70 to 90 mol%) of an oxyaryl carbonic acid unit such as oxybenzoic acid or oxynaphthalene carbonic acid, a dicarboxy aryl unit such as naphthalene dicarbonic acid, or a dioxy aryl unit such as hydroxynone; and may be entirely an aromatic polyester. Moreover, an alkylene arylate unit such as alkylene terephthalate may be contained.

The polyester resin may be manufactured by common methods, for example, ester exchange reaction, direct esterification, etc.

The phosphonium salt and polyester resin represented in the previously described general formula (1) may be compounded by skilled persons using well-known methods. For example, the master batch and direct compounding methods may be cited. With the master batch method, high concentration phosphonium salt and polyester resin are compounded, mixed, and made into a master batch, which is then compounded with the desired amount of polyester resin and molded by extrusion or injection. In addition, with the direct compounding method, the desired amount of phosphonium salt and the desired amount of polyester resin are compounded, and are molded by extrusion or injection. Further, the method of mixing with a calender roller may also be cited.

<Olefin resin>

Homopolymer or copolymer α-olefins (specifically, α-C₂₋₁₀ olefins) such as, for example, ethylene, propylene, 1-butene, 3-methyl-1-pentene, 4-methyl-1-butene, 1-hexene, and 1-octene may be cited as the olefin resin. Preferable olefin resins include ethylene resins containing ethylene units as the main component (for example, 75 to 100 weight%) (for example, polyethylene, ethylene-propylene copolymer, ethylene-(meth)acrylic acid copolymer, etc.), and propylene resins containing propylene units as the main component (for example, 75 to 100 weight%) (for example, polypropylene, propylene-ethylene copolymer, propylene-(meth)acrylic acid copolymer, etc.). Olefin resins may be used singly or in combinations of two or more kinds. Preferably, the olefin resins are crystalline olefin resins (specifically, propylene resins).

<Acrylic resins>

Acrylic resins include (meth)acrylic acid C₁₋₁₀ alkyl esters such as, for example, (meth)acrylic acid and methyl (meth)acrylate, homopolymer or copolymer of (meth)acrylic monomers such as (meth)acrylamide and (meth)acrylonitrile, or copolymers of (meth)acryl monomers and other monomers that can be copolymerized (for example, acrylonitrile-styrene copolymer, acrylonitrile-styrene-(meth)acrylic acid ester copolymer, etc.). Preferable acrylic resins include polymethyl (meth)acrylate, acrylic acid alkyl ester-methyl methacrylate copolymer, (meth)acrylic acid-styrene copolymer, and methyl (meth)acrylate-styrene copolymer, etc. These acrylic resins may be used singly or in combinations of two or more.

<Styrene resins>

Styrene resins include, for example, homopolymer or copolymer of styrene monomers (for example, styrene, vinyl toluene, α-methylstyrene, chlorostyrene, etc.); copolymers of styrene monomers and vinyl monomers (for example, unsaturated nitriles such as acrylonitrile; (meth)acrylic acid ester; and α,β-monoolefinic unsaturated carbonic acid such as (meth)acrylic acid, anhydrous maleic acid, etc., acid anhydrides thereof, and esters thereof; etc.); styrene graft copolymers, and styrene block copolymers.

Preferable styrene resins include polystyrene (GPPS), styrene-methyl methacrylate copolymer, styrene-(meth)acrylate copolymer, styrene-anhydrous maleic acid copolymer, styreneacrylonitrile copolymer (AS resin), and high impact polystyrene (HIPS) wherein styrene monomer is copolymerized in a rubber component, and polystyrene graft or block copolymers. Polystyrene graft copolymers include copolymers in which at least one of styrene monomer and copolymeric monomer are graft polymerized to a rubber component (for example, ABS resin in which styrene and acrylonitrile are graft polymerized to polybutadiene, AAS resin in which styrene and acrylonitrile are graft polymerized to acrylic rubber, ACS resin in which styrene and acrylonitrile are graft polymerized to polyethylene chloride, polymers in which styrene and acrylonitrile are graft polymerized to ethylene-vinyl acetate copolymer, polymers in which styrene and acrylonitrile are graft polymerized to ethylene-propylene rubber, MBS resin in which styrene and methyl methacrylate are graft polymerized to polybutadiene, and resins in which styrene and acrylonitrile are graft polymerized to styrene-butadiene copolymer rubber), etc. Block copolymers include copolymers structured by polystyrene blocks and diene or olefin blocks (for example, styrene-butadiene block copolymer, styrene-butadiene-styrene (SBS) block copolymer, styrene-isoprene block copolymer, styrene-isoprene-styrene (SIS) block copolymer, hydrogenated styrene-butadiene-styrene (SEBS) block polymer, and hydrogenated styrene-isoprene-styrene (SEPS) block polymer. These styrene resins may be used singly or in combinations of two or more.

<Polyamide resins>

Polyamide resins include polyamides derived from diamine and dicarbonic acid; polyamides obtained by jointly using aminocarbonic acid, and as necessary, diamine and/or dicarbonic acid; and polyamides derived from lactam, and as necessary, diamine and/or dicarbonic acid. Polyamides include copolyamides molded using at least two differing kinds of polyamide molding components.

Aliphatic diamines such as trimethylene diamine, tetramethylene diamine, pentamethylene diamine, hexamethylene diamine, 2,2,4-trimethyl hexamethylene diamine, 2,4,4-trimethyl hexamethylene diamine, octamethylene diamine, and nonamethylene diamine; aromatic diamines such as phenylene diamine, and meta-xylylene diamine; and alicyclic diamines such as bis(4-aminocyclohexyl) methane, and bis(4-amino-3-methyl cyclohexyl) methane may be cited as examples of diamines. These diamines may be used singly or in combinations of two or more.

Dicarbonic acids include, for example, C₄₋₂₀ aliphatic dicarbonic acids such as glutaric acid, adipic acid, pimelic acid, suberic acid, azelaic acid, sebacic acid, and octadecane diacid; dimerized aliphatic acids (dimer acids); alicyclic dicarbonic acids such as cyclohexane-1,4-dicarbonic acid, and cyclohexane-1,3-dicarbonic acid; and aromatic dicarbonic acids such as phthalic acid, anhydrous phthalic acid, isophthalic acid, terephthalic acid, and naphthalene dicarbonic acid. These dicarbonic acids may be used singly or in combinations of two or more.

Examples of aminocarbonic acids include C₄₋₂₀ aminocarbonic acids such as aminoheptanic acid, aminononanic acid, and aminoundecanic acid. These aminocarbonic acids may be used singly or in combinations of two or more. Lactams include, for example, C₄₋₂₀ lactams such as butyrolactam, pivalolactam, caprolactam, capryllactam, enantholactam, undecanolactam, and dodecalactam. These lactams may be used singly or in combinations of two or more.

Polyamide resins include aliphatic polyamides such as nylon 46, nylon 6, nylon 66, nylon 610, nylon 612, nylon 11, and nylon 12; polyamides obtained from aromatic dicarbonic acids (for example, terephthalic acid and/or isophthalic acid) and aliphatic diamines (for example, hexamethylene diamine); polyamides obtained from aliphatic dicarbonic acid (for example, adipic acid) and aromatic diamines (for example meta-xylylene diamine); and polyamides obtained from aromatic and aliphatic dicarbonic acids (for example terephthalic acid and adipic acid) and aliphatic diamines (for example, hexamethylene diamine, nonamethylene diamine). These polyamides may be used singly or in combinations of two or more. Preferable polyamides include nylon 6, nylon 66, nylon 610, nylon 612, nylon 11, nylon 12, and polyamides in which at least one component of diamine component and dicarbonic acid component is an aromatic compound.

In addition, copolymer polyamides such as nylon 66-nylon 6, nylon 6-nylon 610 may also be used.

<Polycarbonate resins>

Polycarbonate resins include polymers obtained by a reaction of dihydroxy compounds with phosgene or ester carbonate [diaryl carbonate (diphenyl carbonate, etc.) or dialkyl carbonate (dimethyl carbonate, diethyl carbonate, etc.)]. Dihydroxy compounds may be alicyclic compounds, but bisphenol compounds are preferable.

Bis(hydroxyaryl) C₁₋₆ alkanes such as bis(4-hydroxyphenyl) methane, 1,1-bis(4-hydroxyphenyl) propane, 2,2-bis(4-hydroxyphenyl) propane (bisphenol A), 2,2-bis(4-hydroxy-3-methylphenyl) propane, 2,2-bis(4-hydroxyphenyl) butane, 2,2-bis(4-hydroxyphenyl)-3-methyl butane, 2,2-bis(4-hydroxyphenyl) hexane, and 2,2-bis(4-hydroxyphenyl)-4-methyl pentane; bis(hydroxyaryl) C₄₋₁₀ cycloalkanes such as 1,1-bis(4-hydroxyphenyl) cyclopentane, and 1,1-bis(4-hydroxyphenyl) cyclohexane; 4,4'-dihydroxy diphenyl ether; 4,4'-dihydroxy diphenyl sulfone; 4,4'-dihydroxy diphenyl sulfide; and 4,4'-dihydroxy diphenyl ketone may be cited as bisphenol compounds.

Preferable polycarbonate resins include bisphenol aromatic polycarbonates (specifically, bisphenol A aromatic polycarbonate).

In addition, the terminals of the polycarbonate resin may be closed (bonded) with alcohols, mercaptans, or phthalimides (specifically, monovalent alcohols). Monovalent alcohols to close the terminals of the polycarbonate resin include, for example, monovalent aryl alcohols (monovalent phenols and C₁₋₁₀ alkyl groups and/or C₆₋₁₀ aryl group may be substituted, for example, phenol, o,m,p-cresol, dimethylphenol, o,m,p-ethylphenol, o,m,p-n-propylphenol, o,m,p-isopropylphenol, o,m,p-n-butylphenol, o,m,p-s-butylphenol, o,m,p-t-butylphenol, o,m,p-phenylphenol, o,m,p-benzylphenol, cumylphenol, etc.); alkyl alcohols (C₁₋₂₀ alkyl monoalcohols such as methanol, ethanol, n-propanol, isopropanol, butanol, pentanol, hexanol, dodecyl alcohol, and stearyl alcohol); and aralkyl alcohols (C₇₋₂₀ aralkyl monoalcohols such as benzyl alcohol, and phenethyl alcohol). Further, cyclic oligocarbonates and cyclic polycarbonates that do not have closed terminals are also included.

<Polyphenylene oxide resins>

Polyphenylene oxide resins include homopolymers and copolymers. Poly(2,5-dimethyl-1,4-phenylene) oxide, poly(2,6-dimethyl-1,4-phenylene) oxide, poly(2-methyl-6-ethyl-1,4-phenylene) oxide, poly(2,6-di-n-propyl-1,4-phenylene) oxide, poly(2-ethyl-6-isopropyl-1,4-phenylene) oxide, poly(2-methyl-6-hydroxyethyl-1,4-phenylene) oxide, and poly(2-methyl-6-chloroethyl-1,4-phenylene) oxide may be cited as homopolymers.

Polyphenylene oxidecopolymers include denatured polyphenylene oxide copolymers structured by a polyphenylene oxide block as the main structure, and an alkylphenol denatured benzene formaldehyde resin block obtained by allowing an alkylphenol such as cresol or p-tert-butylphenol to react with a benzene formaldehyde resin or alkylbenzene formaldehyde resin; and denatured graft copolymers in which a styrene polymer is grafted onto a polyphenylene oxide or a copolymer thereof.

<Vinyl resins>

Vinyl resins include homopolymers or copolymers of vinyl monomers (for example, vinyl esters such as vinyl acetate, vinyl propionate, vinyl crotonate, and vinyl benzoate; vinyl monomers containing chlorine (for example, vinyl chloride); vinyl monomers containing fluorine (for example, fluoro ethylene, chloroprene, etc.); vinyl ketones such as methyl vinyl ketone, and methyl isopropenyl ketone; vinyl ethers such as vinyl methyl ether, and vinyl isobutyl ether; and vinyl amines such as N-vinyl carbazol, and N-vinyl pyrrolidone), or copolymers with other monomers that can be copolymerized.

Derivatives of the previously described vinyl resins (for example, polyvinyl alcohol, polyvinyl formal, polyvinyl acetals such as polyvinyl butyral, ethylene-vinyl acetate copolymer, and ethylene-vinyl alcohol copolymer) may also be used.

<Other resins>

Polyacetal resins, aliphatic polyketone resins (ketone resins); polyphenylene sulfide resins (for example, polyphenylene sulfide, polyphenylene sulfide ketone, polybiphenylene sulfide, and polyphenylene sulfide sulfone, etc.); polysulfone (for example, thermoplastic polysulfone, poly(ether sulfone), poly(4,4'-bisphenolether sulfone, etc.); polyether ketone; poly(ether ether ketone); thermoplastic polyurethane resins (for example, polymers obtained by reacting diisocyanate compounds such as trilene diisocyanate with the previously described glycols and/or previously described diamines, and polyurethane elastomers that may have segments such as polytetramethylene glycol, etc.); thermoplastic polyimides; polyoxybenzylene; and thermoplastic elastomers, etc. may be cited as examples of other resins.

These resins may be used singly or in combinations of two or more. Preferable thermoplastic resins include styrene resins, polyamide resins, polyester resins that may be liquid polyester, polycarbonate resins, polyphenylene oxide resins, polyphenylene sulfide resins, and vinyl resins; more preferably, polyester resins, polycarbonate resins, polyamide resins, and styrene resins; and specifically, polyester resins such as PET and PBT resins are preferable.

The number average molecular weight of the thermoplastic resins is not particularly limited, may be suitably selected corresponding to the type of resin and use, and may be selected, for example, from the range of 5x10³ to 200x10⁴, preferably 1x10⁴ to 150x10⁴, and more preferably 1x10⁴ to 100x10⁴. In addition, if the thermoplastic resin is a polyester resin, the number average molecular weight may be, for example, in the range of 5x10³ to 100x10⁴, preferably 1x10⁴ to 70x10⁴, and more preferably 1.2x10⁴ to 30x10⁴.

Next, thermoset resins will be explained. Various resins, for example, epoxy resins (bisphenol A, bisphenol F, bisphenol AD, and novolac epoxy resins, etc.), phenol resins (resol phenol resins, etc.), amino resins (melamine resin, guanamine resin, urea resins, etc.), polyurethane resins, unsaturated polyester resins, vinyl ester resin, diaryl phthalate resins, cyanate ester resins, silicone resins, and polyimide resins may be cited as thermoset resins. Preferable among these thermoset resins are epoxy resin, phenol resin, amino resin (melamine resin, urea resins, etc.), and polyurethane resins. These thermoset resins may include one or more hardening agents. Isocyanates, amines, and acid anhydrides may be cited as hardening agents. These thermoset resins may be used singly or in combinations of two or more.

Because of thermal resistance superior to that of conventional ammonium salt antistatic agents, the antistatic agent of the present embodiment can be suitably used even for the resins described above that are mixed and molded at temperatures of 200° C or more in the resins.

These resins may be used singly or by mixing two or more kinds. When manufacturing the resin, molecular weight regulators and catalytic agents, etc. may be used as necessary.

The antistatic agent containing the phosphonium salt represented by the general formula (1) as the effective component, which is to be used as the antistatic agent of the present invention, is preferably compounded in 0.01 to 50 weight parts per 100 weight parts of resin. The antistatic characteristics may be insufficient if compounded at less than 0.01 weight parts, and there may be a undesired effect on the characteristics of the resin if exceeding 50 weight parts. A compounding range 0.1 to 7 weight parts is more preferable, and 2 to 5 weight parts is an even more preferable range.

Generally, the method of mixing the resins and the phosphonium salt as well as the mixing order are not particularly limited, and mixing may be conducted using well-known mixers, for example, tumbler, ribbon blender, or high-speed mixer. Subsequent melting and mixing may be conduced by single-screw or double-screw extruders.

Further, well-known additives such as thermal stabilizers, releasing agents, ultraviolet absorbents, fire retardants, dyes and pigments may be compounded as necessary into the resin within a range that does not lose the effects of the present invention. Moreover, glass fibers may be added and molded for the purpose of raising the mechanical strength.

Highly transparent resins with high antistatic performance may be obtained when compounding the antistatic agent related to the present embodiment as described above into highly transparent resin materials because the transparency of the resins is hardly diminished at all. Further, even when adding the antistatic agent related to the present embodiment into a low transparency resin, the antistatic function is fully manifest. Moreover, it goes without saying that when transparency is not particularly necessary, the antistatic agent of the present embodiment may be added to a highly transparent resin, and then the transparency of the resin may be decreased by adding pigments and fillers, etc.

At the same time, conductive material may be also added to the resin, which should further improve the antistatic performance of the antistatic agent described above. Carbon materials such as carbon black and carbon nanotubes may be cited as examples of conductive materials, and in particular, carbon nanotubes are preferable.

The antistatic resin molded products of the present invention will be explained next.

The antistatic resin compositions of the present invention may be used in the same way as normal resins for resin molded products requiring antistatic performance.

The antistatic resin molded products of the present invention may be molded by skilled persons using well-known molding methods such as, for example, injection molding, extrusion molding, blow molding, vacuum molding, hollow molding, and draw molding. Skilled persons may suitably select the optimum molding conditions and molding methods. When using thermoset resins as the resin, the molding process includes a step wherein the antistatic resin composition is heated and hardened. Moreover, specifically, if molding a resin in which carbon nanotubes are compounded, the antistatic performance is heightened by heightening the resin molding (injection) temperature.

In addition, the antistatic resin composition of the present invention is superior not only in antistatic performance, but also in the characteristic that the transparency of the resin is not reduced, and therefore, is suitable for use in transparent molded products. The use, and molding methods and conditions are the same as those previously described.

Further, the antistatic resin composition, in which the antistatic agent of the present invention has been mixed in a resin such as epoxy resin, acrylic resin, and urethane resin, may be used as a coating agent or a coating material. In this case, the effect is to suppress the static electricity of the coated member.

(Examples)

Concrete examples of the present invention will be explained below, but the present invention is not limited to these examples. Further, unless otherwise indicated, "part" and "%" are based on weight standards.

<Manufacturing Example 1: Antistatic Agent A>

1783 g (1.924 mol) of tri-n-butyl-n-hexadecylphosphonium chloride 50% aqueous solution (manufactured by Nippon Chemical Industrial, Co., Ltd.) was diluted with 9 L of ion-exchanged water. 222.0 g (2.024 mol) of sodium fluoroborate (manufactured by Morita Chemical Industries, Co.) was dissolved in 1 L of ion-exchanged water, and after filtering the undissolved component with filter paper, this was titrated into the phosphonium salt aqueous solution at room temperature (15° C). After titration was complete, this was allowed to mature for 60 minutes at room temperature (25° C).

Next, the slurry obtained was filtered by centrifugal separation. Six liters of ion-exchanged water was added to the crystals obtained after filtering; this was agitated for 15 minutes at room temperature, and was again filtered by centrifuge. The filter solution was analyzed by titrating with silver nitrate aqueous solution, and the slurry was rinsed and re-filtered repeatedly until becoming halogen negative.

Next, drying was conducted at 70° C under reduced pressure (5 mmHg). Drying conducted until the weight no longer changed, and was completed after 18 hours. 939 g of tri-n-butyl-n-hexadecylphosphonium tetrafluoroborate was obtained (yield 94.3%). The tributylhexadecylphosphonium tetrafluoroborate was melted at 70° C, transferred to a stainless steel vat, and was allowed to harden. After pulverizing, sifting with a sieve, and re-drying at 10 mmHg, 40° C, the targeted tri-n-butyl-n-hexadecylphosphonium tetrafluoroborate was obtained.
Melting point: 54° C (melting point measuring apparatus using light transmission method).
Decomposition temperature: 421° C (TG-DTA)
Halogen content: 85 ppm (silver nitrate titration)
Residual water content: 0.20% (Carl Fischer hygrometer)

<Manufacturing Example 2: Antistatic Agent B>

The same procedures as in Manufacturing Example 1 were conducted using 178.3 g (0.192 mol) of tri-n-butyl-n-tetradecylphosphonium chloride 50% aqueous solution (manufactured by Nippon Chemical Industrial, Co., Ltd.) and 22.20 g (0.202 mol) of sodium fluoroborate (manufactured by Morita Chemical Industries, Co.), and tri-n-butyl-n-tetradecylphosphonium tetrafluoroborate was obtained.
Melting point: 53° C (melting point measuring apparatus using light transmission method).
Decomposition temperature: 423° C (TG-DTA)
Halogen content: 78 ppm (silver nitrate titration)
Residual water content: 0.18% (Carl Fischer hygrometer)

<Manufacturing Example 3: Antistatic Agent C> [Reference example]

The same procedures as in Manufacturing Example 1 were conducted using 2779.3 g (3.0 mol) of tri-n-butyl-n-hexadecylphosphonium chloride 50% aqueous solution and 579.8 g (3.15 mol) of potassium hexafluorophosphate instead of sodium fluoroborate, and tri-n-butyl-n-hexadecylphosphonium hexafluorophosphate was obtained.
Melting point: 50.0° C (melting point measuring apparatus using light transmission method).
Decomposition temperature: 369.7° C (TG-DTA)
Halogen content: 89 ppm (silver nitrate titration)
Residual water content: 0.21% (Carl Fischer hygrometer)

<Manufacturing Example 4: Antistatic Agent D>

The same procedures as in Manufacturing Example 1 were conducted using 1127 g (1.924 mol) 50% tetra-n-butylphosphonium chloride instead of tri-n-butyl-n-hexadecylphosphonium chloride, and tetra-n-butylphosphonium tetrafluoroborate was obtained.
Melting point: 99° C (melting point measuring apparatus using light transmission method).
Decomposition temperature: 389.4° C (TG-DTA)

First, the case when the antistatic agent is added to the thermoplastic resin will be explained.

<Example 1>

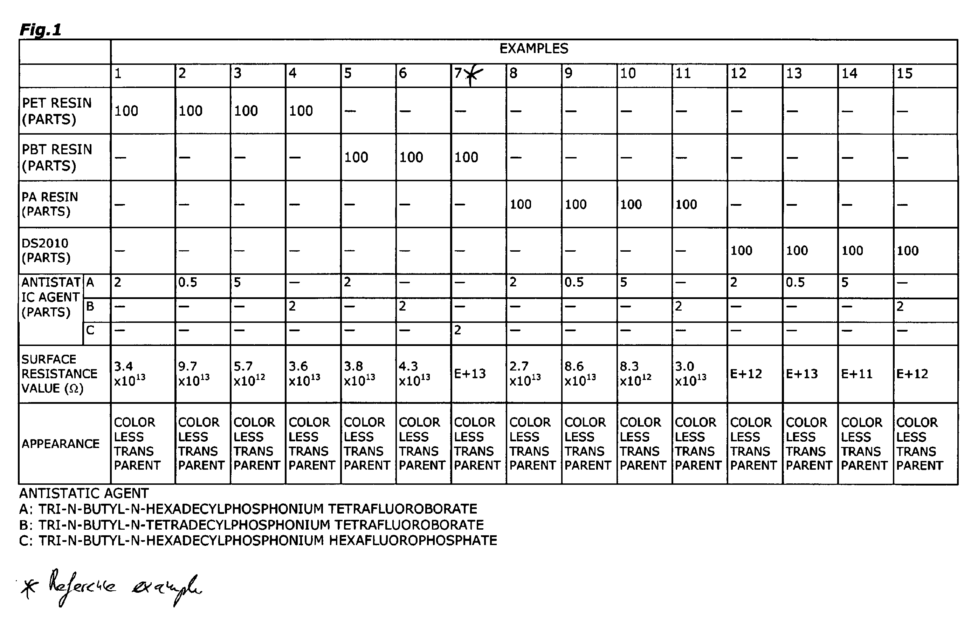

One hundred parts of polyethylene terephthalate resin (TR-4550BH, manufactured by Teijin Chemical Co.) and 2 parts of the antistatic agent A synthesized in Manufacturing Example 1 were melted and mixed at 270° C, 100 rpm using a tabletop double-screw mixer, and pellets were obtained. Circular disk test pieces (⌀100 mm x 1.6 mm) were produced from these pellets using an injection molder (Kloeckner F40) at a cylinder temperature of 270° C (nozzle part), and were provided for various tests. The test results are indicated in Fig. 1.

Further, the test methods were as follows.

For transparency, coloration and clarity were visually observed.

The surface resistance values were tested using the JIS K6911 standard. The atmosphere was 23° C/60%. Conductive paste (Ag) was used for the electrodes. The measurement time was 1 minute. The applied voltage was 500 V.

<Examples 2 and 3>

Other than changing the amounts of the antistatic agent A as indicated in Fig. 1, the procedures conducted, the test pieces produced, and the types of tests performed were all the same as in Example 1. The results are indicated in Fig. 1.

<Example 4>

Other than using the antistatic agent B instead of antistatic agent A, the procedures conducted, the test pieces produced, and the types of tests performed were all the same as in Example 1. The results are indicated in Fig. 1.

<Examples 5, 6, and Reference Example 7>

Pellets were obtained by using polybutylene terephthalate resin (Julanex 2002, manufactured by WinTec Polymer Ltd.), and by conducting the same procedures as in Example 1 with the respective compounding quantities indicated in Fig. 1 at a mixing temperature of 250° C. Circular disk test pieces (diameter 100 mm x 1.6 mm) were produced from these pellets using an injection molder (Kloeckner F40) at a cylinder temperature of 260° C (nozzle part), and were provided for various tests. The test results are indicated in Fig. 1. In Fig. 1, PBT means polybutylene terephthalate.

<Examples 8, 9, and 10>

Pellets were obtained by using polyamide resin (UBE Nylon 6 1013B, manufactured by Ube Kosan Co.) instead of polybutylene terephthalate resin, and by conducting the same procedures as in Example 1 with the respective compounding quantities indicated in Fig. 1 at a mixing temperature of 230° C. Circular disk test pieces (diameter 100 mm x thickness 1.6 mm) were produced from these pellets using an injection molder (Kloeckner F40) at a cylinder temperature of 240° C (nozzle part), and were provided for various tests. The test results are indicated in Fig. 1.

<Examples 12, 13, 14, and 15>

DuraStar DS2010 (manufactured by Eastman Chemical Co.) was used as the polyester resin. After compounding and blending this in polyethylene bags with the various antistatic agents in the amounts stated in Fig. 1, pellets were produced using a double-screw extruder. Next, 50 mm x 80 mm x 3 mm plates were produced by an injection molder, and were presented for the respective tests. The test results are indicated in Fig. 1.

<Comparative Examples 1 to 11>

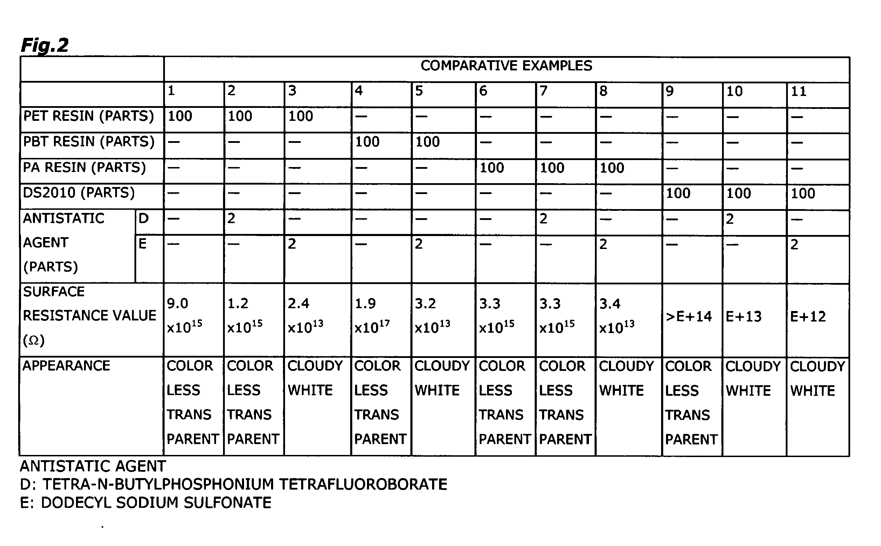

Other than changing the various kinds of antistatic agents indicated in Fig. 2, the same procedures as in Example 1 were conducted, and pellets were obtained. Using the various pellets obtained, as well as pellets of Comparative Example 1 in which no antistatic agent was compounded, test pieces were produced and various tests were conducted in the same way as in Example 1. The results are indicated in Fig. 2.

Further, in the surface resistance value (Ω) column in Figs. 1 and 2, the listing of "E+12", for example, indicates that the surface resistance value is in the order of 10¹².

In addition, sodium dodecyl sulfonate (class 1 product, manufactured by Kanto Chemical, sodium n-dodecyl sulfonate) was used as the antistatic agent E.

Examples 1 to 15 were cases of using the antistatic agent of the present embodiment, and all had low surface resistance values, and were colorless and transparent in appearance.

Meanwhile, Comparative Examples 1, 4, 6, and 9 were all compounded without antistatic agents, and naturally in these cases the required level for surface resistance was not satisfied. Comparative Examples 2, 7, and 10 were phosphonium salts in which the alkyl R⁴ in the general formula (1) had four carbons, and the surface resistance values were clearly poor. Moreover, Comparative Examples 3, 5, 8, and 11 were compounded with the well-known alkyl sulfonate sodium salts as the antistatic agent. The surface resistance values of these were not a problem, but the appearance was cloudy white.

Next, examples of the use of thermoset resins will be explained.

[Examples 16, 17]

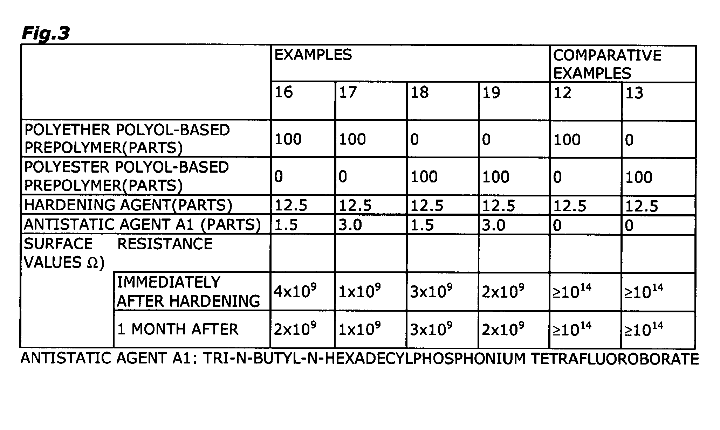

After heating polyether polyol-based prepolymer (Haipuiren L-100, manufactured by Mitsui Takeda Chemical) to 100° C, the specified amount of antistatic agent A1 (Hishikorin PX-416FB , manufactured by Nippon Chemical Industrial Co.) was added and agitated, and was reheated to 100° C. Further, after adding the specified amount of hardening agent (Bisamine A, manufactured by Wakayama Seika) that was dissolved at 120° C to this prepolymer solution and agitating, this prepolymer solution was infused into a mold heated to 100° C, and hardened for 4 hours. The amounts of the various materials added are indicated in Fig. 3. Then, the surface resistance of the hardened urethane elastomers was measured in the same way as in Example 1 using a HIRESTA-UP manufactured by Mitsubishi Chemical. The surface resistance values are indicated in Fig. 3. Further, the components of the antistatic agent A1 are the same as the tri-n-butyl-n-hexadecylphosphonium tetrafluoroborate as that of the antistatic agent A manufactured in Manufacturing Example 1.

<Comparative Example 12>

This was produced in the same manner as Example 16 except the antistatic agent A1 was not added. The compound and the results are indicated in Fig. 3.

<Examples 18, 19>

These were produced in the same way as Examples 16 and 17 except that polyester polyol-based polymer (Takenate L-1290, manufactured by Mitsui Takeda Chemical) was used instead of the polyether polyol-based prepolymer.

<Comparative Example 13>

This was produced in the same manner as Example 18 except the antistatic agent A1 was not added. The compounds and the results are indicated in Fig. 3.

Examples 16 to 19 all used the antistatic agent of the present embodiment, the surface resistance values were sufficiently low, and a high antistatic effect was demonstrated even in relation to thermoset resins. Specifically, in these examples a sufficient antistatic effect was maintained even after one month had passed. It appears that with polyether urethanes, adding about 1 to 2 parts of antistatic agent per 100 parts of prepolymer is preferable, and with polyester urethanes adding 2 to 3 parts per 100 parts of prepolymer is preferable.

Meanwhile, Comparative Examples 12 and 13 were cases in which the antistatic agent of the present embodiment was not compounded, and did not satisfy the required levels for the surface resistance values.

Next, the examples of when adding the antistatic agent of the present embodiment will be explained in relation to thermoset resins with added carbon nanotubes.

<Example 20>

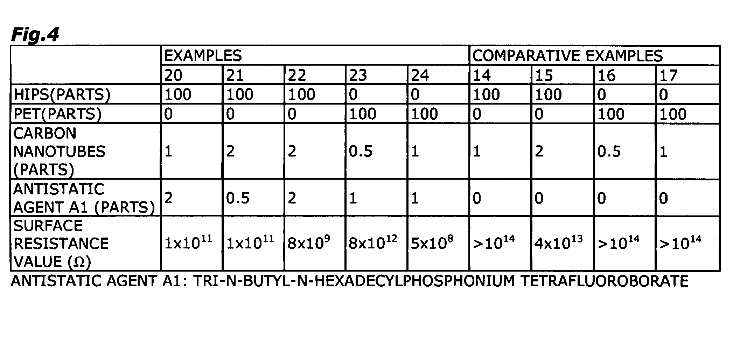

HIPS (high impact polystyrene, US310, manufactured by Idemitsu Petrochemicals Co.), antistatic agent A1, and carbon nanotubes (manufactured by Hypellion) were fused and mixed at 100 rpm and at a temperature of 270° C using a tabletop double-screw mixer, and pellets were obtained. The amounts of HIPS, antistatic agent and carbon nanotubes compounded are indicated in Fig. 4. Circular disk test pieces (⌀100 mm x 1.6 mm) were produced from these pellets using an injection molder (Kloeckner F40) at a cylinder temperature of 270° C (nozzle part). The surface resistance of the test pieces was tested in the same manner as in Example 1. The test results are indicated in Fig. 4.

<Comparative Examples 14, 15>

These were produced in the same way as Examples 20 and 21, except that no antistatic agent A1 was added. The compounds and results and indicated in Fig. 4.

<Examples 23, 24>

These were produced in the same way as Example 20, except that PET (polyethylene terephthalate, A-12, manufactured by Eastman Chemical) was used instead of HIPS, and the PET, carbon nanotubes and antistatic agent A1 were compounded as indicated in Fig. 4. The results are indicated in Fig. 4.

<Comparative Examples 16, 17>

These were produced in the same manner as Examples 23 and 24 except that the antistatic agent A1 was not added. The results are indicated in Fig. 4.

As indicated by Comparative Examples 14 to 17, a satisfactory antistatic effect could not be obtained when only carbon nanotubes are added, but in contrast, when jointly using the antistatic agent A1 with the carbon nanotubes, the surface resistance could be lowered to the order of 10⁸ Ω, as indicated, for example, by Example 24.
Industrial Applicability [0151] The present invention offers a novel antistatic agent that can grant superior antistatic characteristics to various types of resins without out diminishing the transparency of the resin, and the present invention offers antistatic resin compositions, and antistatic resin molded products containing this agent.

## Claims

1. Use of phosphonium salts represented by the general formula (1): 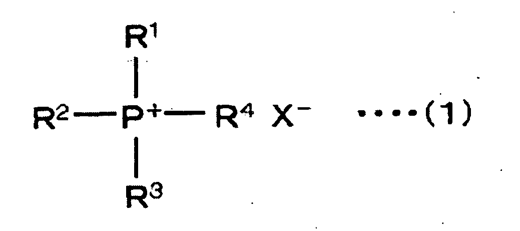 wherein R¹, R², and R³ are each a straight-chain or branched alkyl group having 3 to 8 carbon atoms, and R⁴ is a straight-chain or branched alkyl group having 10 to 22 carbon atoms; each alkyl group may have substituted hydroxy group or alkoxy group; R¹, R², and R³ may be the same or different from each another; and X⁻ is a tetrafluoroborate ion as an antistatic agent for resins.

2. Use according to Claim 1, wherein the phosphonium salt is tri-n-butyl-n-hexadecylphosphonium tetrafluoroborate.

3. Use according to Claims 1 or 2, wherein the residual halogen is 500 ppm or less.

4. Use according to Claims 1 to 3 for thermoplastic resins.

5. Use according to Claim 4 for polyamide resins or for polyester resins.

6. Use according to any of Claims 1 to 3 for thermoset resins.

7. Use according to Claim 6 for epoxy resins.

8. Use according to any of Claims 1 to 7, wherein the amount of the phosphonium salt compounded is 0.01 to 50 weight parts per 100 weight parts resin.

9. Use according to any of Claims 1 to 8, wherein carbon material is further contained.

10. Use according to Claim 9, wherein the carbon nanotubes are contained as the carbon material.

## Patentansprüche

1. Verwendung von Phosphoniumsalzen, die durch die allgemeine Formel (1) 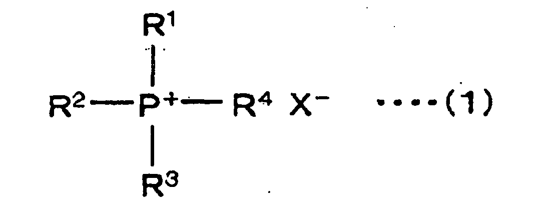 dargestellt werden, wobei R¹, R² und R³ jeweils eine geradkettige oder verzweigte Alkylgruppe mit 3 bis 8 Kohlenstoffatomen sind und R⁴ eine geradkettige oder verzweigte Alkylgruppe mit 10 bis 22 Kohlenstoffatomen ist, wobei jede Alkylgruppe mit einer Hydroxygruppe oder einer Alkoxygruppe substituiert sein kann, R¹, R² und R³ gleich oder verschieden sein können und X- ein Tetrafluoroborat-Ion ist, als antistatisches Mittel für Harze.

2. Verwendung gemäß Anspruch 1, wobei es sich bei dem Phosphoniumsalz um Tri-n-butyl-n-hexadecylphosphoniumtetrafluoroborat handelt.

3. Verwendung gemäß Anspruch 1 oder 2, wobei der Halogenrestgehalt 500 ppm oder weniger beträgt.

4. Verwendung gemäß Anspruch 1 bis 3 für thermoplastische Harze.

5. Verwendung gemäß Anspruch 4 für Polyamidharze oder Polyesterharze.

6. Verwendung gemäß einem der Ansprüche 1 bis 3 für duroplastische Harze.

7. Verwendung gemäß Anspruch 6 für Epoxyharze.

8. Verwendung gemäß einem der Ansprüche 1 bis 7, wobei die Menge des compoundierten Phosphoniumsalzes 0,01 bis 50 Gewichtsteile pro 100 Gewichtsteile Harz beträgt.

9. Verwendung gemäß einem der Ansprüche 1 bis 8, wobei weiterhin Kohlenstoffmaterial enthalten ist.

10. Verwendung gemäß Anspruch 9, wobei Kohlenstoff-Nanotubes als Kohlenstoffmaterial enthalten sind.

## Revendications

1. Utilisation de sels de phosphonium représentés par la formule générale (1): 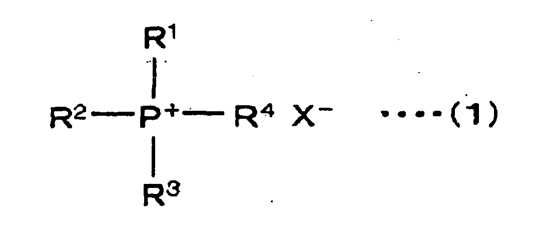 dans laquelle R¹, R² et R³ sont chacun un groupement linéaire ou ramifié avec 3 à 8 atomes de carbone, et R⁴ est un groupement linéaire ou ramifié avec 10 à 22 atomes de carbone; chaque groupement alkyle peut être substitué par un groupe hydroxy ou un groupe alcoxy; R¹, R² et R³ peuvent être similaires ou différents; et X⁻ est un ion de tétrafluoroborate, comme agent antistatique pour les résines.

2. Utilisation selon la revendication 1, dans laquelle ledit sel de phosphonium est la tétrafluoroborate de tri-n-butyl-n-hexadécylphosphonium.

3. Utilisation selon l'une quelconque des revendications 1 ou 2, dans laquelle l'halogène résiduel est de 500 ppm ou moins.

4. Utilisation selon les revendications 1 à 3 pour les résines thermoplastiques.

5. Utilisation selon la revendication 4 pour les résines polyamides ou pour les résines polyesters.

6. Utilisation selon l'une quelconque des revendications 1 à 3 pour les résines thermodurcissables.

7. Utilisation selon la revendication 6 pour les résines époxy.

8. Utilisation selon l'une quelconque des revendications 1 à 7, dans laquelle la quantité du sel de phosphonium mélangé dedans est de 0,01 à 50 parties en poids pour 100 parties en poids de résine.

9. Utilisation selon l'une quelconque des revendications 1 à 8, dans laquelle du matériau de carbone est contenu en outre.

10. Utilisation selon la revendication 9, dans laquelle des nanotubes de carbone sont contenus en tant de matériau de carbone.
